# FASCICULE DE BREVET EUROPEEN

(11) **EP 3 921 124 B1**
(45) Date de publication et mention de la délivrance du brevet: **27.03.2024**
(21) Numéro de dépôt: 20707726.4
(22) Date de dépôt: 06.02.2020
(51) Int. Cl.: B25J 15/00, B25J 9/14, B25J 15/06, B25J 17/00, B25J 19/00, B25J 19/06

(54) **DISPOSITIF D'ORIENTATION ET/OU DE PRÉHENSION D'OBJET, À MEMBRANE ÉLASTIQUE À LONGÉVITÉ ACCRUE, ET ROBOT ASSOCIÉ**
VORRICHTUNG ZUM ORIENTIEREN UND/ODER GREIFEN EINES GEGENSTANDES, MIT EINER ELASTISCHEN MEMBRAN MIT ERHÖHTER LANGLEBIGKEIT, UND ROBOTER DAFÜR
DEVICE FOR ORIENTING AND/OR GRIPPING AN OBJECT, WITH AN ELASTIC MEMBRANE WITH INCREASED LONGEVITY, AND ROBOT THEREFOR

(30) Priorité: 08.02.2019 FR 1901261
(43) Date de publication de la demande: 15.12.2021
(73) Titulaire: Stellantis Auto SAS, 78300 Poissy (FR)
(72) Inventeur: DIVERRES, Stéphane, 35380 Maxent (FR); GELIN, Frederic, 35131 Pont Pean (FR); ARNAUD, Yannick, 49070 Beaucouzé (FR); DENOEL, Pascal, 75008 Paris (FR)
(86) Numéro de dépôt international: PCT/FR2020/050206
(87) Numéro de publication internationale: WO 2020/161441

(56) Documents cités:
- WO-A1-2018/168025
- WO-A1-2018/215705
- WO-A1-2019/065269
- CN-A- 107 457 797
- SU-A1- 556 940

## Description

### Domaine technique de l'invention

La présente invention revendique la priorité de la demande française 1901261 déposée le 08 Février 2019.

L'invention concerne les dispositifs qui permettent l'orientation et/ou la préhension d'objets.

### Etat de la technique

Dans certains domaines techniques on utilise des dispositifs d'orientation et/ou de préhension d'objet pour manipuler et/ou déplacer des objets (éventuellement fragiles). On notera que de tels dispositifs peuvent être utilisés manuellement par des personnes ou bien par des robots, par exemple sur des chaînes de montage. A titre d'exemple, ces dispositifs peuvent être utilisés pour transporter et positionner des pare-brise ou des éléments de carrosserie de véhicules, éventuellement de type automobile, ou des vitres de bâtiment.

Comme décrit dans le document brevet EP 3 248 738, certains de ces dispositifs, dédiés à la préhension d'objet, comprennent un support, une membrane élastique et une éventuelle ventouse. Un exemple supplémentaire de l'état de l'art est divulgué dans SU 556 940 A1 qui divulgue les caractéristiques du préambule de la revendication 1.

Le support comprend au moins un passage pour un fluide et peut être tenu par une personne ou un bras d'un robot.

La membrane est solidarisée fixement au support et définit une enceinte qui est déformable et fermée, et qui communique avec le passage de fluide du support et contient un matériau granuleux. Ce dernier peut prendre soit un état non compacté permettant la déformation de l'enceinte, pour saisir un objet, en présence d'une surpression du fluide (résultant d'une injection via le passage de fluide), soit un état compacté figeant la forme en cours de l'enceinte en présence d'une dépression du fluide (résultant d'une expulsion via le passage de fluide). Lorsque l'enceinte est déformée suite à une injection de fluide et que les dimensions de l'objet à saisir sont petites, la membrane peut épouser partiellement la forme de cet objet, et donc lorsque l'on expulse l'air de l'enceinte (par aspiration), le matériau granuleux redevient compact et fige la forme de la membrane permettant ainsi de la saisir.

La ventouse est solidarisée fixement à la membrane et destinée à être plaquée très étroitement contre un objet plat pour sa manutention lorsque ses dimensions sont trop importantes pour qu'il puisse être saisi par la membrane.

Un inconvénient principal des dispositifs de préhension d'objet décrits ci-avant réside dans le fait qu'ils imposent l'établissement d'une nouvelle surpression de fluide dans l'enceinte chaque fois que l'on veut faire revenir le matériau granuleux dans son état non compacté après avoir instauré une dépression, ce qui provoque à chaque fois un gonflement de la membrane et donc un étirement de sa matière qui provoque un vieillissement accéléré. En outre, se pose un problème de répétabilité du fait de cette dérive de l'élasticité de la matière.

L'invention a donc notamment pour but d'améliorer la situation.

### Présentation de l'invention

Elle propose notamment à cet effet un dispositif d'orientation et/ou de préhension d'objet selon la revendication 1.

Ce dispositif comprend un support avec au moins un passage pour un fluide, et une membrane élastique, solidarisée fixement à ce support et définissant une enceinte déformable, fermée, communiquant avec le passage, et contenant un matériau granuleux prenant soit un état non compacté permettant la déformation de l'enceinte, pour orienter et/ou saisir un objet, en présence d'une pression du fluide supérieure à un seuil, soit un état compacté figeant la forme en cours de l'enceinte en présence d'une dépression du fluide.

La membrane comprend des nervures qui sont réparties sur sa surface en joignant deux zones diamétralement opposées et qui provoquent un retour automatique du matériau granuleux dans son état non compacté lorsque la pression du fluide parvient à une pression atmosphérique après une dépression.

Ainsi, les nervures offrent un surplus de matière qui permet d'éviter de gonfler la membrane en étirant sa matière après chaque phase de dépression, et par conséquent on ne risque plus d'accélérer son vieillissement lors des utilisations successives de son dispositif d'orientation d'objet et/ou de préhension.

Le dispositif d'orientation et/ou de préhension d'objet selon l'invention peut comporter d'autres caractéristiques qui peuvent être prises séparément ou en combinaison, et notamment :
- chaque zone de sa membrane peut présenter une forme circulaire. Dans ce cas, les nervures peuvent comprendre des premières extrémités réparties sur un pourtour de l'une des deux zones et des secondes extrémités opposées à leurs premières extrémités et réparties sur un pourtour de l'autre zone ;
- les zones peuvent avoir respectivement des centres par lesquels passe un axe de révolution de la membrane ;
- sa membrane peut être définie avec ses nervures par moulage d'une matière élastique ;
- il comprend une ventouse apte à la préhension d'un objet plat et solidarisée fixement à la membrane afin de présenter une orientation par rapport au support qui est fonction de la déformation en cours de cette membrane ;
   ➢ la ventouse peut comprendre un conduit destiné à être couplé à un dispositif d'alimentation en fluide au moins chargé d'aspirer de l'air compris entre elle et un objet à saisir afin de la plaquer contre cet objet en vue de sa manutention ;
   ➢ la ventouse est solidarisée fixement à la membrane au niveau de l'une des deux zones ;
- son support peut comprendre une fixation qui est propre à le solidariser à une partie au moins d'un bras d'un robot de manipulation d'objet.

L'invention propose également un robot de manipulation d'objet comprenant au moins un bras comprenant au moins un dispositif d'orientation d'objet et/ou de préhension du type de celui présenté ci-avant.

### Brève description des figures

D'autres caractéristiques et avantages de l'invention apparaîtront à l'examen de la description détaillée ci-après, et des dessins annexés, sur lesquels :
[Fig. 1] illustre schématiquement, dans une vue de côté, un premier exemple de réalisation d'un dispositif d'orientation d'objet et/ou de préhension selon l'invention, et
[Fig. 2] illustre schématiquement, dans une vue du dessus, la membrane du dispositif d'orientation d'objet et/ou de préhension de la figure 1,

### Description détaillée de l'invention

L'invention a notamment pour but de proposer un dispositif d'orientation d'objet et/ou de préhension DO destiné à permettre à une personne ou à un robot de manipuler et/ou déplacer un objet, directement ou indirectement.

Dans ce qui suit, on considère, à titre d'exemple non limitatif, que les objets qui doivent être manipulés et/ou déplacés sont des pièces ou équipements de véhicules, éventuellement de type automobile. Il s'agit, par exemple et non limitativement, de pare-brise, de vitres arrière, ou d'éléments de carrosserie de véhicules, devant être transportés et positionnés. Mais l'invention n'est pas limitée à ce type d'objets. Elle concerne en effet tout type d'objet pouvant être saisi et manipulé manuellement ou par un robot. Ainsi, elle concerne également les vitres de bâtiment, les bidons (de différentes tailles), et les tôles ondules, par exemple.

Comme illustré, un dispositif d'orientation d'objet et/ou de préhension DO, selon l'invention, comprend au moins un support SM et une membrane MP.

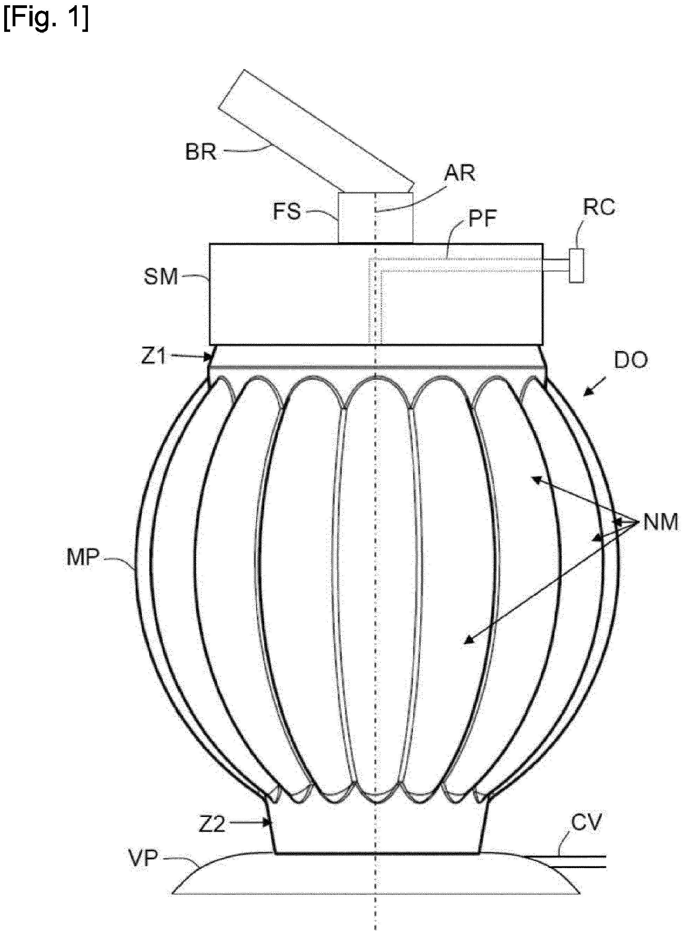

Le support SM comprend au moins un passage PF pour un fluide. Ce dernier peut, par exemple, être de l'air. Mais il pourrait s'agir d'un autre gaz. Ce passage PF peut, par exemple et comme illustré non limitativement sur la figure 1, comprendre au moins un conduit comportant des première et seconde extrémités opposées. La première extrémité débouche dans une enceinte de la membrane MN, sur laquelle on reviendra plus loin. La seconde extrémité est destinée à être couplée à un premier dispositif d'alimentation en fluide (non représenté) au moins propre à aspirer du fluide présent dans l'enceinte précitée. Ce couplage peut, par exemple, se faire via un raccord (ou connecteur) RC équipant la seconde extrémité du conduit PF, comme illustré non limitativement sur la figure 1.

La membrane MP est réalisée dans un matériau élastique et est solidarisée fixement au support SM. De plus, cette membrane MP définit une enceinte qui est déformable et fermée, et qui communique avec le passage de fluide PF. Par exemple, cette enceinte peut avoir une forme générale sphérique. Cette enceinte contient un matériau granuleux MG qui prend soit un état non compacté qui permet la déformation de l'enceinte, pour orienter et/ou saisir un objet, en présence d'une pression du fluide supérieure à un seuil, soit un état compacté qui permet de figer la forme en cours de l'enceinte en présence d'une dépression du fluide. En d'autres termes, lorsque la pression à l'intérieur de l'enceinte est supérieure au seuil le matériau granuleux MG n'est pas compacté et donc on peut déformer la membrane MP, tandis que lorsque la pression à l'intérieur de l'enceinte est très inférieure au seuil le matériau granuleux MG est compacté et donc on ne peut pas déformer la membrane MP (dont la forme est alors figée). Par exemple, ce matériau granuleux MG peut être du sable, des coquilles de noix concassées ou des granules de plastique.

La membrane MP comprend aussi des nervures NM qui sont réparties sur sa surface en joignant deux zones Zj (j = 1 ou 2) diamétralement opposées et qui provoquent un retour automatique du matériau granuleux MG dans son état non compacté lorsque la pression du fluide parvient à une pression atmosphérique après une dépression. La pression atmosphérique est de préférence la pression seuil mentionnée dans le paragraphe précédent.

Le retour automatique du matériau granuleux MG dans son état non compacté résulte du fait que chaque nervure NM constitue une espèce de réserve de matière qui est en quelque sorte « repliée » dans la phase de dépression et qu'il suffit de « déplier » par un retour à la pression atmosphérique pour obtenir un grossissement du périmètre de la membrane MP sans étirement de sa matière et donc avec beaucoup moins de fatigue. Du fait des nervures NM la fatigue est répartie sur une surface élastique beaucoup plus importante, ce qui permet de réduire la fatigue du matériau.

Grâce à ce retour automatique du matériau granuleux MG dans son état non compacté en présence d'une pression atmosphérique, on n'a plus besoin de gonfler la membrane MP en étirant sa matière, et par conséquent on ne risque plus d'accélérer son vieillissement lors des utilisations successives de son dispositif d'orientation d'objet et/ou de préhension DO. En d'autres termes, la longévité du dispositif d'orientation d'objet et/ou de préhension DO est accrue par rapport à celle d'un dispositif d'orientation d'objet et/ou de préhension de l'art antérieur comprenant une membrane lisse.

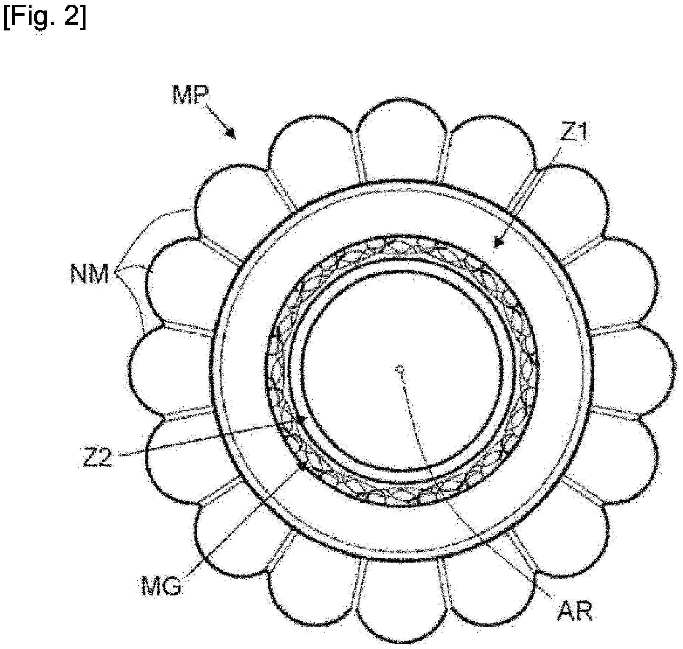

Par exemple, et comme illustré non limitativement sur la figure 2, chaque zone Zj peut présenter une forme circulaire. Les diamètres respectifs de ces deux zones peuvent être différents, comme illustré non limitativement sur les figures 1 et 2, ou bien identiques. En présence de telles zones Zj circulaires les nervures NM comprennent des premières extrémités E1 qui sont réparties sur le pourtour de la première zone Z1 et des secondes extrémités E2 opposées à leurs premières extrémités E1 et réparties sur le pourtour de la seconde zone Z2. Comme illustré non limitativement sur les figures 1 et 2, ces nervures NM peuvent présenter des formes similaires à celle d'une banane.

Les nervures NM peuvent être identiques (comme illustré non limitativement) ou bien différentes.

Egalement par exemple, et comme illustré non limitativement sur les figures 1 et 2, les deux zones Zj peuvent avoir respectivement des centres par lesquels passe un axe de révolution AR de la membrane MP. En d'autres termes, dans ce cas les deux zones Zj sont superposées en ayant leurs centres placés l'un au-dessus de l'autre, ce qui est compatible avec une forme générale symétrique de l'enceinte (par exemple sphérique).

On notera que la membrane MP peut, par exemple, être définie avec ses nervures NM par moulage d'une matière élastique. Par exemple, cette matière élastique peut être un élastomère. Ainsi, il peut, par exemple, s'agir d'un nitrile ou d'un silicone. L'épaisseur de la membrane peut, par exemple, être comprise entre 0,5 mm et 5 mm. Ainsi, cette épaisseur peut, par exemple, être égale à 1 mm.

On notera également, comme illustré non limitativement sur la figure 1, que le dispositif d'orientation et/ou de préhension d'objet DO comprend une ventouse VP apte à la préhension d'un objet plat. Cette ventouse VP est solidarisée fixement à la membrane MP afin de présenter une orientation par rapport au support SM qui est fonction de la déformation en cours de cette membrane MP. On comprendra en effet que la déformation de la membrane MP peut induire une nouvelle orientation de la ventouse VP par rapport au support SM, et donc dans l'espace, et cette nouvelle orientation est avantageusement figée en instaurant une dépression dans l'enceinte (par aspiration de fluide via le passage de fluide PF).

Par exemple, la ventouse VP peut être solidarisée fixement à la membrane MP au niveau de l'une des deux zones Zj. Comme illustré non limitativement sur la figure 1, cette dernière zone Zj peut être la seconde Z2, en particulier lorsque le support SM est solidarisé fixement à la première zone Z1. Mais cela n'est pas obligatoire.

Egalement par exemple, la ventouse VP peut comprendre un conduit CV destiné à être couplé à un second dispositif d'alimentation en fluide (non représenté) au moins chargé d'aspirer de l'air qui est compris entre elle (VP) et un objet à saisir afin de la plaquer contre cet objet en vue de sa manutention.

Comme indiqué plus haut, la déformation figée de la membrane MP peut induire une orientation particulière figée de la ventouse VP par rapport au support SM, et donc dans l'espace, parfaitement adaptée à la saisie d'un objet plat qui n'est pas placé sensiblement parallèlement au support SP.

De préférence, une fois la manutention de l'objet terminée ce second dispositif d'alimentation en fluide est aussi chargé d'injecter de l'air entre la ventouse VP et l'objet manutentionné, afin de permettre son écartement de ce dernier.

On notera également, comme illustré non limitativement sur la figure 1 et comme évoqué ci-dessus, que le support SM peut comprendre une fixation FS propre à le solidariser à une partie au moins d'un bras BR d'un robot de manipulation d'objet.

On notera également qu'un robot de manipulation d'objet peut comprendre un ou plusieurs bras comprenant chacun un ou plusieurs dispositifs d'orientation et/ou de préhension d'objet DO. Un tel robot de manipulation d'objet peut, par exemple, équiper une chaîne de montage (éventuellement de véhicules).

Comme indiqué plus haut, la déformation figée de la membrane MP peut induire une orientation particulière figée de la ventouse VP par rapport au support SM, et donc dans l'espace, parfaitement adaptée à la saisie d'un objet plat qui n'est pas placé sensiblement parallèlement au support SP.

De préférence, une fois la manutention de l'objet terminée ce second dispositif d'alimentation en fluide est aussi chargé d'injecter de l'air entre la ventouse VP et l'objet manutentionné, afin de permettre son écartement de ce dernier.

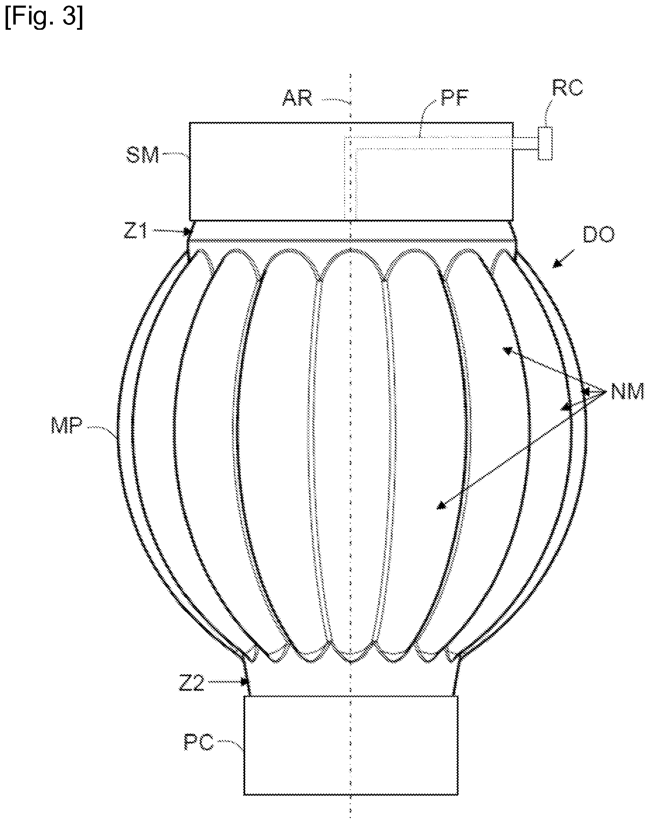

On notera également, comme illustré non limitativement sur la figure 3, que la membrane MP peut être solidarisée fixement au support SM au niveau de l'une (Z1) des deux zones Zj (ici la première), et le dispositif d'orientation et/ou de préhension d'objet DO peut comprendre une pièce de couplage PC à la place de la ventouse VP (optionnelle). Dans ce cas, la pièce de couplage PC est solidarisée fixement à l'autre zone (ici la seconde Z2) et définit avec la membrane MP et le support SM une articulation.

On comprendra en effet que la déformation figée de la membrane MP peut induire une orientation particulière figée de la pièce de couplage PC par rapport au support SM (qui peut alors aussi constituer une autre pièce de couplage), et donc dans l'espace. Par conséquent, si le support SM est solidarisé à une première pièce (comme par exemple une première partie d'un bras BR de robot) et si la pièce de couplage PC est solidarisée à une seconde pièce (comme par exemple une seconde partie de ce même bras BR de robot) on peut obtenir une orientation choisie de la seconde pièce par rapport à la première pièce, grâce à une déformation choisie de la membrane MP. Ainsi, la pièce de couplage PC, la membrane MP et le support SM constituent bien ensemble une articulation (par exemple d'un bras BR de robot). La seconde pièce peut être ici considérée comme un objet qui est orienté dans l'espace.

On notera également, comme illustré non limitativement sur la figure 1 et comme évoqué ci-dessus, que le support SM peut comprendre une fixation FS propre à le solidariser à une partie au moins d'un bras BR d'un robot de manipulation d'objet. De même, la pièce de couplage PC peut comprendre une fixation propre à la solidariser à une partie au moins d'un bras d'un robot de manipulation d'objet. Cette option peut ainsi permettre au bras du robot soit de saisir un petit objet avec la membrane MP déformée (épousant ce dernier) ou bien un objet plat avec l'éventuelle ventouse VP, soit de se déformer et/ou s'orienter dans l'espace grâce à la déformation de la membrane MP.

On notera également qu'un robot de manipulation d'objet peut comprendre un ou plusieurs bras comprenant chacun un ou plusieurs dispositifs d'orientation et/ou de préhension d'objet DO. Un tel robot de manipulation d'objet peut, par exemple, équiper une chaîne de montage (éventuellement de véhicules).

## Revendications

1. Dispositif d'orientation et/ou de préhension d'objet (DO) comprenant i) un support (SM) avec au moins un passage (PF) pour un fluide, et ii) une membrane (MP) élastique, solidarisée fixement audit support (SM) et définissant une enceinte déformable, fermée, communiquant avec ledit passage (PF), et contenant un matériau granuleux (MG) prenant soit un état non compacté permettant la déformation de ladite enceinte, pour orienter et/ou saisir un objet, en présence d'une pression dudit fluide supérieure à un seuil, soit un état compacté figeant la forme en cours de ladite enceinte en présence d'une dépression dudit fluide, ladite membrane (MP) comprenant des nervures (NM) réparties sur sa surface en joignant deux zones (Zj) diamétralement opposées et provoquant un retour automatique dudit matériau granuleux (MG) dans son état non compacté lorsque la pression dudit fluide parvient à une pression atmosphérique après une dépression, **caractérisé en ce qu'**il comprend une ventouse (VP) apte à la préhension d'un objet plat et solidarisée fixement à ladite membrane (MP) afin de présenter une orientation par rapport audit support (SM) fonction de la déformation en cours de cette membrane (MP).

2. Dispositif selon la revendication 1, **caractérisé en ce que** chaque zone (Zj) présente une forme circulaire, et **en ce que** lesdites nervures (NM) comprennent des premières extrémités (E1) réparties sur un pourtour de l'une desdites zones (Z1) et des secondes extrémités (E2) opposées à leurs premières extrémités (E1) et réparties sur un pourtour de l'autre zone (Z2).

3. Dispositif selon la revendication 1 ou 2, **caractérisé en ce que** lesdites zones (Zj) ont respectivement des centres par lesquels passe un axe de révolution de ladite membrane (MP).

4. Dispositif selon l'une des revendications 1 à 3, **caractérisé en ce que** ladite membrane (MP) est définie avec ses nervures (NM) par moulage d'une matière élastique.

5. Dispositif selon l'une quelconque des revendications précédentes, **caractérisé en ce que** ladite ventouse (VP) comprend un conduit (CV) destiné à être couplé à un dispositif d'alimentation en fluide au moins chargé d'aspirer de l'air compris entre elle (VP) et un objet à saisir afin de la plaquer contre ledit objet en vue de sa manutention.

6. Dispositif selon l'une quelconque des revendications précédentes, **caractérisé en ce que** ladite ventouse (VP) est solidarisée fixement à ladite membrane (MP) au niveau de l'une desdites zones (Zj).

7. Dispositif selon l'une des revendications 1 à 6, **caractérisé en ce que** ledit support (SM) comprend une fixation (FS) propre à le solidariser à une partie au moins d'un bras d'un robot de manipulation d'objet.

8. Robot de manipulation d'objet, comprenant au moins un bras, **caractérisé en ce que** ledit bras comprend au moins un dispositif d'orientation et/ou de préhension d'objet (DO) selon l'une des revendications précédentes.

## Patentansprüche

1. Vorrichtung zum Ausrichten und/oder Greifen eines Objekts (DO), umfassend i) einen Träger (SM) mit mindestens einem Durchgang (PF) für ein Fluid und ii) eine elastische Membran (MP), die fest mit dem Träger (SM) verbunden ist und einen geschlossenen, verformbaren Behälter definiert, der mit dem Durchgang (PF) in Verbindung steht, und ein körniges Material (MG) enthält, das entweder einen nicht verdichteten Zustand, der die Verformung des Behälters ermöglicht, zum Ausrichten und/oder Greifen eines Objekts bei einem Druck des Fluids oberhalb eines Schwellenwertes aufweist, oder einen verdichteten Zustand, der die gegenwärtige Form des Behälters bei einem Unterdruck des Fluids festlegt MP) mit Rippen (NM), die über ihre Oberfläche verteilt sind, indem sie zwei diametral gegenüberliegende Zonen (Zj) verbinden, und die eine automatische Rückkehr des körnigen Materials (MG) in seinen nicht verdichteten Zustand bewirken, wenn der Druck des Fluids nach einem Unterdruck einen atmosphärischen Druck erreicht, **dadurch gekennzeichnet, dass** er einen Saugnapf (VP) umfasst, der zum Ergreifen eines flachen Gegenstands geeignet ist und fest mit der Membran (MP) verbunden ist, um eine Orientierung in Bezug auf den Träger (SM) in Abhängigkeit von der laufenden Verformung dieser Membran (MP) zu zeigen.

2. Vorrichtung nach Anspruch 1, **dadurch gekennzeichnet, dass** jeder Bereich (Zj) eine kreisförmige Form aufweist, und dass die Rippen (NM) erste Enden (E1) umfassen, die über einen Umfang eines der Bereiche (Z1) verteilt sind, und zweite Enden (E2), die ihren ersten Enden (E1) gegenüberliegen und über einen Umfang des anderen Bereichs (Z2) verteilt sind.

3. Vorrichtung nach Anspruch 1 oder 2, **dadurch gekennzeichnet, dass** die Zonen (Zj) jeweils Zentren aufweisen, durch die eine Rotationsachse der Membran (MP) verläuft.

4. Vorrichtung nach einem der Ansprüche 1 bis 3, **dadurch gekennzeichnet, dass** die Membran (MP) mit ihren Rippen (NM) durch Formen eines elastischen Materials definiert ist.

5. Vorrichtung nach einem der vorhergehenden Ansprüche, **dadurch gekennzeichnet, dass** der Saugnapf (VP) eine Leitung (CV) umfasst, die dazu bestimmt ist, mit einer Flüssigkeitszufuhrvorrichtung gekoppelt zu werden, die wenigstens dafür ausgelegt ist, Luft zwischen sich (VP) und einen zu greifenden Gegenstand zu saugen, um sie zum Handhaben gegen den Gegenstand zu drücken.

6. Vorrichtung nach einem der vorhergehenden Ansprüche, **dadurch gekennzeichnet, dass** der Saugnapf (VP) an einer der Zonen (Zj) fest mit der Membran (MP) verbunden ist.

7. Vorrichtung nach einem der Ansprüche 1 bis 6, **dadurch gekennzeichnet, dass** der Träger (SM) eine Befestigung (FS) umfasst, die geeignet ist, ihn mit mindestens einem Teil eines Arms eines Roboters zur Handhabung von Gegenständen zu verbinden.

8. Roboter zur Handhabung von Gegenständen, der mindestens einen Arm umfasst, **dadurch gekennzeichnet, dass** der Arm mindestens eine Vorrichtung zum Ausrichten und/oder Greifen von Gegenständen (DO) nach einem der vorhergehenden Ansprüche umfasst.

## Claims

1. Device for orienting and/or gripping an object (DO) comprising i) a support (SM) with at least one passage (PF) for a fluid, and ii) an elastic membrane (MP) fixedly attached to said support (SM) and defining a closed deformable enclosure communicating with said passage (PF) and containing a granular material (MG) taking either an uncompacted state allowing deformation of said enclosure, to orient and/or grasp an object, in the presence of a pressure of said fluid above a threshold, or a compacted state freezing the current shape of said enclosure in the presence of a depression of said fluid, said membrane (MP) ribs (NM) distributed over its surface by joining two diametrically opposite zones (Zj) and causing automatic return of said granular material (MG) to its uncompacted state when the pressure of said fluid reaches atmospheric pressure after a depression, **characterized in that** it comprises a suction cup (VP) capable of gripping a flat object and fixedly attached to said membrane (MP) in order to have an orientation with respect to said support (SM) as a function of the ongoing deformation of this membrane (MP).

2. Device according to claim 1, **characterized in that** each zone (Zj) has a circular shape, and **in that** the said ribs (NM) comprise first ends (E1) distributed over a periphery of one of the said zones (Z1) and second ends (E2) opposite their first ends (E1) and distributed over a periphery of the other zone (Z2).

3. Device according to claim 1 or 2, **characterized in that** the said zones (Zj) respectively have centres through which passes an axis of revolution of the said membrane (MP).

4. Device according to one of claims 1 to 3, **characterized in that** the said membrane (MP) is defined with its ribs (NM) by molding an elastic material.

5. Device according to any one of the preceding claims, **characterized in that** the said suction cup (VP) comprises a conduit (CV) intended to be coupled to a fluid supply device at least responsible for sucking in air contained between it (VP) and an object to be gripped in order to press it against the said object with a view to its handling.

6. Device according to any one of the preceding claims, **characterized in that** the said suction cup (VP) is fixedly attached to the said membrane (MP) at one of the said zones (Zj).

7. Device according to one of claims 1 to 6, **characterized in that** the said support (SM) comprises a fixing (FS) able to secure it to at least a part of an arm of an object handling robot.

8. Robot for manipulating an object, comprising at least one arm, **characterized in that** said arm comprises at least one device for orienting and/or gripping an object (DO) according to one of the preceding claims.
